Europäisches Patentamt

**European Patent Office**

Office européen des brevets

(19)

(11) Numéro de publication : **0 004 229**
**B1**

(12)

# FASCICULE DE BREVET EUROPÉEN

(45) Date de publication du fascicule du brevet :
26.01.83

(51) Int. Cl.³ : **G 08 B 13/00//** B60R25/04,
B60R25/10

(21) Numéro de dépôt : **79400125.5**

(22) Date de dépôt : **27.02.79**

(54) **Télécommande magnétique d'un relais bistable.**

(30) Priorité : 13.03.78 FR 7807197

(43) Date de publication de la demande :
19.09.79 **Bulletin 79/19**

(45) Mention de la délivrance du brevet :
26.01.83 **Bulletin 83/04**

(84) Etats contractants désignés :
**DE FR GB IT**

(56) Documents cités :
**DE A 2 143 931**
**FR A 1 502 994**
**FR A 2 250 165**

(73) Titulaire : **Lika, Nicolas**
**18, rue de Berri**
**F-75008 Paris (FR)**

(72) Inventeur : **Lika, Nicolas**
**18, rue de Berri**
**F-75008 Paris (FR)**

Jouve, 18, rue St-Denis, 75001 Paris, France

## Télécommande magnétique d'un relais bistable.

La présente invention concerne les dispositifs utilisés pour la commande des alarmes électroniques.

Ce sont généralement des interrupteurs mécaniques à basculeur ou à clef qui sont utilisés et ils sont vulnérables puisqu'ils doivent rester suffisamment accessibles à leur manipulation. On trouve aussi des dispositifs comportant des relais ordinaires câblés dans une configuration dite, selon la formule usitée, en auto-maintien, pour assurer un fonctionnement bistable mais qui ont pour inconvénients de nécessiter deux interrupteurs pour offrir les états de repos/travail et d'autre part le maintien du courant d'excitation dans le bobinage pour conserver l'état de travail. Un tel dispositif est divulgué dans le brevet FR-A-2250 165 et le relais est bien entendu actionné par deux interrupteurs, à lame souple. Dans un autre dispositif divulgué dans le brevet GB-A-944 541 l'utilisation d'un interrupteur mécanique vulnérable se présente comme un inconvénient supplémentaire.

Le dispositif utilisé est constitué par une commande magnétique réalisée à l'aide d'un relais bistable du type ne nécessitant qu'un seul interrupteur pour sa commande et n'imposant qu'une alimentation très fugitive, par impulsions, pour obtenir et conserver les états successifs de ses contacts. Il est invisible car les parties activées par le flux magnétique sont dissimulées derrière une paroi perméable à ce flux.

Le dispositif objet de l'invention comporte :

— un relais non polarisé bistable à une seule bobine dit à accrochage mécanique dont le changement de position des contacts s'effectue suite à l'excitation du relais. Les contacts restent dans cette position lorsque le relais n'est plus excité. Une nouvelle impulsion semblable à la précédente est nécessaire pour faire retomber les contacts dans l'état préalable. Ce relais possède des contacts inverseurs et autorise ainsi toutes les commutations souhaitables :

— un seul interrupteur à lame souple à contacts normalement ouverts qui peut être surmoulé dans un bloc de plastique de protection collé sur la face cachée d'une paroi ;

— un aimant permanent de commande de cet interrupteur à lame souple qui peut être présenté sous la forme d'un porte-clef.

Ainsi dans un exemple d'application à l'automobile, quand les contacts A et B qui ont un point commun à la masse sont en position (a), le contact A ferme le circuit d'alimentation du module électronique d'alarme et le contact B place la bobine d'allumage en masse constante empêchant ainsi la rupture d'alimentation permettant le fonctionnement correct de l'allumage et par conséquent le démarrage du moteur (un voyant placé entre ce contact B et la bobine témoigne de la position (a) des contacts et par suite de l'oubli par le propriétaire de neutraliser l'alarme et l'impossibilité de fonctionnement du moteur). Quand on approche l'aimant 3 de l'interrupteur à lame souple 2 les contacts de celui-ci se ferment et le relais I est excité et ses contacts passent à la position (b). Le contact A ne ferme plus le circuit d'alimentation du module électronique d'alarme et le contact B ne met plus la bobine à la masse : le moteur peut démarrer et l'alarme est neutralisée ; par contre l'un des contacts A ou B ferme le circuit d'alimentation d'un voyant vert qui témoigne alors que tout va bien. Quand on rapproche même un très court instant l'aimant 3 de l'interrupteur à lame souple 2 les contacts A et B du relais I retombent à l'état précédent (a) et y restent jusqu'à la prochaine impulsion et ainsi de suite.

Le dispositif objet de l'invention peut être utilisé dans tous les cas où un interrupteur doit être dissimulé par exemple pour la mise en fonction ou l'arrêt d'alarme électronique et en particulier dans les automobiles : il suffit au propriétaire d'effleurer un très court instant de son aimant-porte-clef un endroit du tableau de bord connu de lui seul derrière lequel est collé l'interrupteur à lame souple pour neutraliser ou mettre en fonction le dispositif d'alarme.

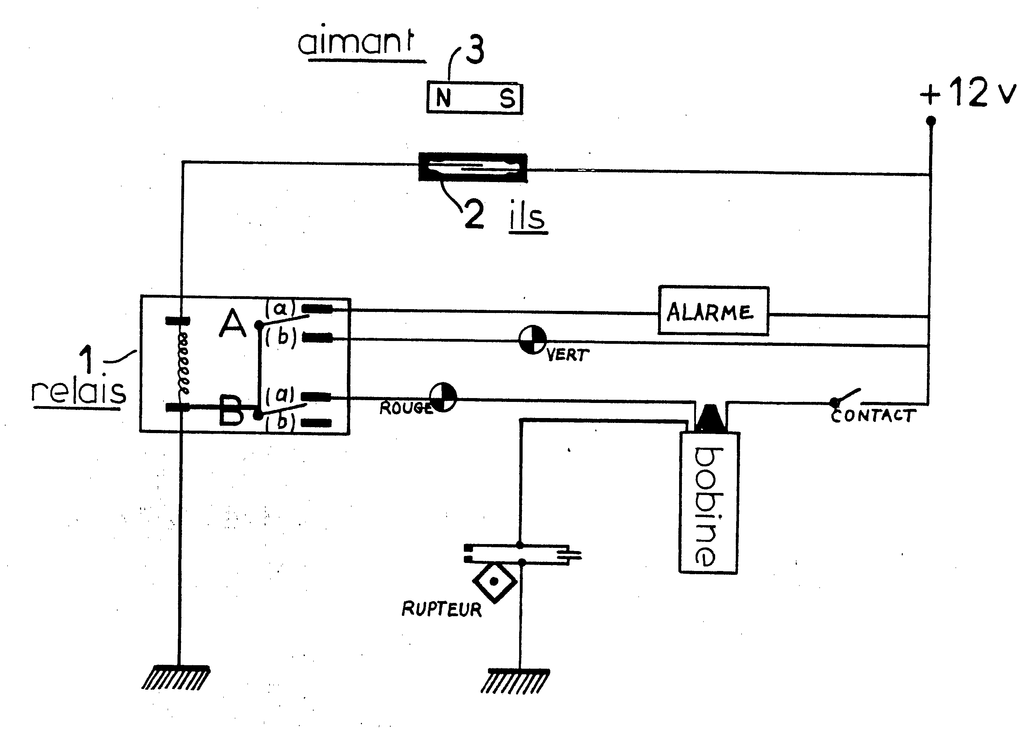

### Revendication

Dispositif permettant la commande d'une alarme électronique constitué par un relais pourvu de contacts inverseurs, un interrupteur à lame souple et un aimant permanent, caractérisé en ce que le relais est de type bistable non polarisé à une seule bobine dit à accrochage mécanique contrôlé par les impulsions émises par ce seul interrupteur à lame souple.

### Claim

Device allowing to control and electronic alarm system, consisting of a relay fitted with flip-flop contacts, a reed switch and a permanent magnet, characterized in that the relay is of bistable type, unbiased, with a single so-called mechanical hook-up coil, controlled by the pulses emitted by this sole reed switch.

### Anspruch

Vorrichtung für die Steuerung eines elektronischen Alarms bestehend aus einem Relais mit Wechselkontakten, einem Messerschalter und einem Permanentmagnet, mit dem Merkmal, dass das Relais bistabil und nicht polarisiert ist mit einer einzigen sogenannten Spule mit mechanischer Befestigung, die von den Impulsen gesteuert wird, die vom einzigen Messerschalter ausgehen.

aimant

3

N    S

+12 v

2 ils

ALARME

1 relais

A (a) (b)

B (a) (b)

VERT

ROUGE

CONTACT

bobine

RUPTEUR

0 004 229